# EUROPEAN PATENT SPECIFICATION

(11) **EP 1 576 886 B1**
(45) Date of publication and mention of the grant of the patent: **14.06.2006**
(21) Application number: 04006331.5
(22) Date of filing: 17.03.2004
(51) Int. Cl.: A23C 19/068

(54) **Mozzarella-type string cheese product**
Pasta- Filata- Käse vom Mozzarella-Typ
Fromage à pâte filetée du type Mozzarella

(43) Date of publication of application: 21.09.2005
(73) Proprietor: Kraft Foods R & D, Inc. Zweigniederlassung München, 81737 München (DE)
(72) Inventor: Schröder, Angela, 83714 Miesbach (DE); Schmid, Thomas, 27321 Thedinghausen (DE); Cortes Martinez, Eduardo, 81667 München (DE); Wolfschoon-Pombo, Alan, 85354 Freising (DE); Mehnert, David, Lake Villa, IL 60046 (US)
(74) Representative: Morf, Jan Stefan

(56) References cited:
- WO-A-01/49123
- US-A- 3 692 540
- US-B1- 6 258 389
- US-B1- 6 372 268
- US-B1- 6 440 481

## Description

### FIELD OF THE INVENTION

The invention relates to a new process for manufacturing Mozzarella-type string cheese products and to the cheese products made by this process.

### STATE OF THE ART

String cheese is a Mozzarella-type cheese product which is shaped by extrusion.

The conventional process for manufacturing Mozzarella-type cheese prodcuts, including string cheese products, consists of pasteurizing cow or buffalo milk, acidifying the milk to convert it to a cheese milk, coagulating the cheese milk to obtain a coagulum comprised of curd and whey, cutting the coagulum and draining the whey therefrom, thereby leaving a cheese curd, heating, kneading and stretching the cheese curd until it is a homogeneous, fibrous mass of heated, unripened cheese, shaping the heated cheese, cooling the shaped cheese in cold brine, and removing the cooled cheese from the brine. Such a process is known for example from U.S. Patent 5,380,543 and WO 96/25051. Reference is also made to US 5902 625.

The heating, kneading and stretching of the cheese curd is typically carried out in a piece of equipment called a hot water mixer/cooker. The temperatures used for heating, kneading and stretching of the cheese curd are quite low. Example 1 of WO 96/25051 mentions a temperature of 49°C.

The texture of the extruded Mozzarella-type cheese products is fibrous and somewhat rubbery. However, the texture of Mozzarella-type cheese products is not of concern because Mozzarella cheese is mostly used for baking purposes, for example for producing pizzas where high baking temperatures are used and where the structure and texture of the Mozzarella cheese is completely altered.

Extruded Mozzarella-type cheese products are not very attractive for direct consumption because of their fibrous and somewhat rubbery texture.

It is the object of the present invention to provide a process for manufacturing extruded Mozzarella-type cheese products, i.e. string cheese products, which have an improved mouthfeel and are more attractive for direct consumption.

### SUMMARY OF THE INVENTION

The invention relates to a process for manufacturing Mozzarella-type string cheese products comprising the steps of
a) providing cheese curd,
b) heating, kneading and stretching the cheese curd together with any desirable ingredients,
c) extruding the cheese product, and
d) cooling the cheese product in cold brine,
characterized in that step b) is performed in a steam injection mixer/cooker.

The invention also relates to Mozzarella-type string cheese products manufactured by the process as described above.

### DETAILED DESCRIPTION OF THE INVENTION

The use of a steam injection mixer/cooker for the heating, kneading and stretching of the cheese curd leads to a Mozzarella-type cheese product which has a greatly improved texture which gives a much better mouthfeel and makes it much more attractive for direct consumption, which has been fully established by consumer tests.

The use of steam injection is known in the production of processed cheese where much higher temperatures are needed and where no extrusion of the final product is involved. It could not be foreseen that the use of steam injection during heating, kneading and stretching of the cheese curd leads to a cheese mass which, despite its extrusion, is no longer fibrous or rubbery. It is believed that the fibrous texture of known extruded Mozzarella-type cheese products is at least in part caused by the extrusion step. Therefore, it is very surprising that the extrusion step within the process of the present invention does not cause the undesired fibrous texture of the Mozzarella cheese and it is further surprising that the string cheese product is no longer rubbery.

An additional advantage of the process of the present invention is brought about by the possibility of adding a much greater variety of different ingredients during the heating, kneading and stretching step, which was not possible with the known use of a hot water mixer/cooker without steam injection.

The process for manufacturing Mozzarella-type cheese products is well-known as mentioned above and the steps of making cheese curd, heating, kneading and stretching the cheese curd in a commonly used mixer/cooker, shaping and especially extruding the cheese product, and cooling the cheese product in cold brine are well described in the above-mentioned U.S. Patent 5,380,543 and WO 96/25051, both of which are hereby incorporated by reference.

The use of a steam injection mixer/cooker in the heating, kneading and stretching step b) will now be described in more detail.

In the conventional process for making Mozzarella-type cheese in a hot water mixer/cooker using hot water as heat provider, pieces of cheese curd and other ingredients are introduced into a container provided with paddles or stirring arms. A volume of hot water having a temperature in the range of 60° to 90°C, typically 80°C, is added, covering the raw material. The components of the raw material are kneaded by the action of the paddles until they melt and aggregate to each other and finally create a homogeneous elastic mass. An alternative to the batch production is the use of a continuous hot water cooker. In this system, the cheese does not remain in a specific location while being kneaded, but is transported through the hot water by means of screws along a pipe. The melting/stretching/homogenisation of the mass is done during the time the cheese needs to reach the exit of the cooker.

In the process of the present invention the ingredients are charged into a batch mixer/cooker which is preferably provided with a double-screw system. The ingredients are pieces of fresh or up to 28-days-old cheese curd and emulsifying salts such as sodium citrate in an amount of up to 1% by weight. Other optional ingredients are dairy ingredients such as milk protein, SMP, etc., as well as non-dairy ingredients such as colouring agents, flavouring agents, meat pieces, nuts, etc., and water. The ingredients are then mixed until they reach a homogeneous distribution.

Steam is then directly applied to the mass by means of injectors which are preferably positioned at the bottom of the cooker. The steam together with the mechanical effect of the screws starts melting and emulsifying the cheese mass while preventing the degradation of the fresh protein. The cheese mass should not reach a temperature of 70°C. The cheese mass preferably reaches a temperature of 60 to 67°C, typically about 64°C. The steam is injected at a pressure of preferably about 2 bar abs., a pressure range of 1.5 to 2.5 bar abs. being possible. The temperature of the steam is preferably in a range of 120°C to 150°C, preferably about 130°C.

The mixing speed or mixing energy input should be relatively high during the time of steam injection in order to avoid local overheating. The steam injection must be terminated when the cheese mass reaches the above-mentioned temperature range of 60 to 67°C in order to avoid degradation.

After further mixing and stretching the cheese mass for several minutes without steam injection, the cheese mass can be transferred to a conventional extruder to produce the desired string cheese product.

The string cheese products made according to the process of the present invention have a texture which is particularly pleasant, melts in mouth and is not fibrous. This is a very surprising and striking result which makes the products according to the invention much more acceptable for direct consumption. It is no longer fibrous and not rubbery.

Moreover, the use of steam injection increases the possibility of using many more ingredients which were unable to be introduced into Mozzarella-type cheese products up to now. This leads to an added increase of consumer acceptance.

Consumer tests which were performed in Great Britain with respect to aroma, appearence, texture, taste and aftertaste revealed a significant improvement in all respects compared with conventionally produced string cheese. The various properties improved by 13 to 34%, the overall acceptance improved by 22%. The most striking improvement is the much more pleasant texture which is no longer fibrous and rubbery.

The following example illustrates the process according to the invention and is not limiting.

### Example

Cheese curd is cut into pieces by means of a dicer, and loaded into the double-screw direct steam injection cooker/mixer (Inotec ISM-250DV, total capacity: 250 1). The remaining ingredients (dairy proteins concentrate powder, calcium milk powder, sodium citrate, colouring agents and water) are weighed separately. The powders are then introduced into the cooker/mixer together with the cheese pieces, and dry-mixed for 1 minute at 40% speed (30 rpm). After that, water and colouring agents are added and mixing is continued for another minute at the same speed (wet mix). The total batch was 175 kg.

Immediately after mixing, steam is directly applied to the mass by means of 4 injectors which are positioned at the bottom of the cooker. The steam, together with the mechanical effect of the screws, starts melting/emulsifying the cheese mass. Heating and mixing is continued until the cheese mass reaches 65°C.

When the cheese reaches 65°C, mixing is continued (without steam) for another 1.5 minutes (55 rpm) in order to complete homogenisation in the cooked cheese mix. At this point, the cheese mix is ready to start the shaping and cooling process steps.

The cheese mass is downloaded into a double-jacketed (40°C water temperature) extruder, which applies a pressure to the cheese mass (0.8 - 1 bar), forcing it to go through double-jacketed extruder head (70°C) with 15 mm diameter nozzles, to create a continuous cheese rope, which falls into a channel with a flow of cold brine (18% salt content, 5°C) and is transported as far as the cutting system (knives activated by an optic sensor) which cuts the cheese sticks (11 cm long).

The product then falls into a brine bath to complete the cooling (down to 7°C) and salting (to 1.6% NaCl in the final product) during 8 minutes of residence time, proceeding finally to the packaging machine and storage under refrigeration.

The obtained string cheese product had a pleasant texture. It was not fibrous or rubbery.

## Claims

1. A process for manufacturing Mozzarella-type string cheese products comprising the steps of
a) providing cheese curd,
b) heating, kneading and stretching the cheese curd together with any desirable ingredients,
c) extruding the cheese product, and
d) cooling the cheese product in cold brine,
**characterized in that** step b) is performed in a steam injection mixer/cooker.

2. Process according to claim 1, **characterized in that** the steam is injected at a pressure of 1.5 to 2.5 bar.

3. Process according to claim 2, **characterized in that** the steam is injected at a pressure of about 2 bar.

4. Process according to any one of claims 1 to 3, **characterized in that** the steam is injected until the cheese mass has reached a temperature in the range of 60° to 67°C.

5. Process according to claim 4, **characterized in that** the steam is injected until the cheese mass has reached a temperature of about 64°C.

6. Process according to any one of claims 1 to 5, **characterized in that** the steam is injected at a pressure of 1.5 to 2.5 bar abs., preferably about 2 bar abs.

7. Process according to any one of claims 1 to 6, **characterized in that** the steam is injected at a temperature in the range of 120°C to 150°C, preferably about 130°C.

8. A Mozzarella-type cheese product manufactured by the process comprising the steps of
a) providing cheese curd,
b) heating, kneading and stretching the cheese curd together with any desirable ingredients,
c) extruding the cheese product, and
d) cooling the cheese product in cold brine,
**characterized in that** step b) is performed in a steam injection mixer/cooker.

## Patentansprüche

1. Ein Verfahren zur Herstellung von Pasta-Filata-Käseprodukten vom Mozzarella-Typ, umfassend die Schritte
a) Bereitstellen von Käsebruch,
b) Erwärmen, Kneten und Ausziehen des Käsebruchs zusammen mit beliebigen gewünschten Zutaten,
c) Extrudieren des Käseprodukts und
d) Abkühlen des Käseprodukts in kalter Salzlake,
**dadurch gekennzeichnet, daß** Schritt b) in einem Mixer/Kocher mit Dampfeinspritzung durchgeführt wird.

2. Verfahren gemäß Anspruch 1, **dadurch gekennzeichnet, daß** der Dampf bei einem Druck von 1,5 bis 2,5 bar eingespritzt wird.

3. Verfahren gemäß Anspruch 2, **dadurch gekennzeichnet, daß** der Dampf bei einem Druck von etwa 2 bar eingespritzt wird.

4. Verfahren gemäß irgendeinem der Ansprüche 1 bis 3, **dadurch gekennzeichnet, daß** der Dampf eingespritzt wird, bis die Käsemasse eine Temperatur im Bereich von 60°C bis 67°C erreicht hat.

5. Verfahren gemäß Anspruch 4, **dadurch gekennzeichnet, daß** der Dampf eingespritzt wird, bis die Käsemasse eine Temperatur von etwa 64°C erreicht hat.

6. Verfahren gemäß irgendeinem der Ansprüche 1 bis 5, **dadurch gekennzeichnet, daß** der Dampf bei einem Druck von 1,5 bis 2,5 bar abs., vorzugsweise etwa 2 bar abs., eingespritzt wird.

7. Verfahren gemäß irgendeinem der Ansprüche 1 bis 6, **dadurch gekennzeichnet, daß** der Dampf bei einer Temperatur im Bereich von 120°C bis 150°C, vorzugsweise etwa 130°C, eingespritzt wird.

8. Ein Käseprodukt vom Mozzarella-Typ, hergestellt durch das Verfahren, umfassend die Schritte
a) Bereitstellen von Käsebruch,
b) Erwärmen, Kneten und Ausziehen des Käsebruchs zusammen mit beliebigen gewünschten Zutaten,
c) Extrudieren des Käseprodukts und
d) Abkühlen des Käseprodukts in kalter Salzlake,
**dadurch gekennzeichnet, daß** Schritt b) in einem Mixer/Kocher mit Dampfeinspritzung durchgeführt wird.

## Revendications

1. Procédé de fabrication de produits de fromage filés du type mozzarelle comprenant les étapes de
a) formation d'un caillé de fromage,
b) chauffage, malaxage et étirage du caillé de fromage conjointement à des ingrédients désirables quelconques,
c) extrusion du produit de fromage, et
d) refroidissement du produit de fromage dans de la saumure froide,
**caractérisé en ce que** l'étape b) est réalisée dans un mélangeur/cuiseur à injection de vapeur.

2. Procédé suivant la revendication 1, **caractérisé en ce que** la vapeur est injectée à une pression de 1,4 à 2,5 bars.

3. Procédé suivant la revendication 2, **caractérisé en ce que** la vapeur est injectée à une pression d'environ 2 bars.

4. Procédé suivant l'une quelconque des revendications 1 à 3, **caractérisé en ce que** la vapeur est injectée jusqu'à ce que la masse de fromage ait atteint une température dans l'intervalle de 60° à 67°C.

5. Procédé suivant la revendication 4, **caractérisé en ce que** la vapeur est injectée jusqu'à ce que la masse de fromage ait atteint une température d'environ 64°C.

6. Procédé suivant l'une quelconque des revendications 1 à 5, **caractérisé en ce que** la vapeur est injectée à une pression de 1,5 à 2,5 bars absolus, avantageusement d'environ 2 bars absolus.

7. Procédé suivant l'une quelconque des revendications 1 à 6, **caractérisé en ce que** la vapeur est injectée à une température dans l'intervalle de 120°C à 150°C, avantageusement d'environ 130°C.

8. Produit de fromage du type mozzarelle fabriqué par le procédé comprenant les étapes de :
a) formation d'un caillé de fromage,
b) chauffage, malaxage et étirage du caillé de fromage conjointement à des ingrédients désirables quelconques,
c) extrusion du produit de fromage, et
d) refroidissement du produit de fromage dans de la saumure froide,
**caractérisé en ce que** l'étape b) est réalisée dans un mélangeur/cuiseur à injection de vapeur.
